# EUROPÄISCHE PATENTSCHRIFT

(11) **EP 3 440 122 B1**
(45) Veröffentlichungstag und Bekanntmachung des Hinweises auf die Patenterteilung: **14.08.2019**
(21) Anmeldenummer: 18732093.2
(22) Anmeldetag: 22.06.2018
(51) Int. Cl.: C08G 18/79, C08G 18/02, C08G 18/22

(54) **GEFÄRBTE KUNSTSTOFFE BASIEREND AUF VERNETZTEN POLYISOCYANATEN**
COLOURED PLASTICS BASED ON CROSSLINKED POLYISOCYANATES
MATIÈRE PLASTIQUE COLORÉE À BASE DE POLYISOCYANATES RÉTICULÉS

(30) Priorität: 28.06.2017 EP 17178496
(43) Veröffentlichungstag der Anmeldung: 13.02.2019
(73) Patentinhaber: Covestro Deutschland AG, 51373 Leverkusen (DE)
(72) Erfinder: HEINZ, Paul, 51375 Leverkusen (DE); HOCKE, Heiko, Shanghai 200122 (CN); ACHTEN, Dirk, 51375 Leverkusen (DE); TILLACK, Jörg, 42699 Solingen (DE)
(74) Vertreter: Levpat
(86) Internationale Anmeldenummer: PCT/EP2018/066752
(87) Internationale Veröffentlichungsnummer: WO 2019/002124

(56) Entgegenhaltungen:
- US-A1- 2017 044 296

## Beschreibung

Die vorliegende Erfindung betrifft Werkstoffe aus vernetzten Isocyanaten, die durch Pigmente und oder Pigmentformulierungen gefärbt sind.

Kunststoffe, die durch katalytische Vernetzung von Isocyanatgruppen aliphatischer Polyisocyanate erhältlich sind, sind in der Literatur kaum beschrieben.

Die Dissertationsschrift von Theo Flipsen: "Design, synthesis and properties of new materials based on densely crosslinked polymers for polymer optical fiber and amplifier applications", Rijksuniversiteit Groningen, 2000 beschreibt die Trimerisierung von monomerem HDI mit einem Neodym/Kronenether-Komplex als Katalysator. Das dabei erhaltene Polyisocyanurat, das gute optische, thermische und mechanische Eigenschaften aufweisen soll, wurde im Rahmen der Dissertation auf seine Eignung für optische Anwendungen, insbesondere als polymerer Lichtleiter untersucht.

WO 2015/166983, die auch als US 2017/044296 veröffentlicht wurde, beschreibt die Verwendung von Isocyanuratpolymeren für den Verguss von Leuchtdioden. Es wird ausdrücklich betont, dass nur solche Polymere zufriedenstellende Eigenschaften aufweisen, die Allophanatgruppen enthalten. Die Zugabe eines faserförmigen Füllstoffs wurde nicht beschrieben.

Da sich beide Veröffentlichungen mit der Herstellung von optischen Bauteilen befassen, ist der Einsatz von Farbstoffen nicht diskutiert worden und wäre für den angestrebten Verwendungszweck auch wenig sinnvoll.

In einer ersten Ausführungsform betrifft die vorliegende Erfindung einen gefärbten Kunststoff erhältlich durch die katalytische Vernetzung einer Polyisocyanatzusammensetzung A in Gegenwart wenigstens eines Pigments, dadurch gekennzeichnet, dass (i) der Kunststoff wenigstens 5 Gew.-% eines faserförmigen Füllstoffs mit einem Aspektverhältnis von wenigstens 100 bezogen auf die Summe der Gewichte von Polyisocyanatzusammensetzung A, Pigment und faserförmigem Füllstoff enthält; und (ii) sich die in Uretdion-, Isocyanurat,- Biuret- und Iminooxadiazindionstrukturen gebundenen Stickstoffanteile auf mindestens 60 % des Gesamtstickstoffgehaltes der Polyisocyanatzusammensetzung A summieren.

"Mit Isocyanat reaktive Gruppen" im Sinne dieser Anmeldung sind Hydroxyl-, Amino- und Thiolgruppen. Besonders bevorzugt beträgt das molare Verhältnis von Isocyanatgruppen zu mit Isocyanat reaktiven Gruppen im Reaktionsgemisch zu Beginn der katalytischen Vernetzung wenigstens 5 : 1, bevorzugt wenigstens 10 : 1. Das "Reaktionsgemisch" besteht aus allen Komponenten, aus dem Farbstoff, dem faserförmigen Füllstoffen, der Polyisocyanatzusammensetzung A und allen weiteren Komponenten, die für eine katalytische Vernetzung der Polyisocyanatzusammensetzung A erforderlich sind. Aus dem Reaktionsgemisch entsteht somit der erfindungsgemäße gefärbte Kunststoff.

Die Kombination von faserförmigen Füllstoffen mit Pigmenten ist besonders vorteilhaft, weil der Farbeffekt eines gegebenen Mengenanteils des Pigments in Anwesenheit eines faserförmigen Füllstoffs größer ist als in dessen Abwesenheit. Somit ist für den gleichen optischen Eindruck eine geringere Pigmentkonzentration erforderlich. Da Pigmente zumindest keinen positiven Beitrag zur Stabilität des Kunststoffs leisten, ihn vielfach sogar schwächen, ist ein möglichst geringer Pigmentanteil vorteilhaft.

### Polyisocyanatzusammensetzung A

Der Begriff "Polyisocyanat", wie hier verwendet, ist eine Sammelbezeichnung für Verbindungen, die im Molekül zwei oder mehrere Isocyanat-Gruppen (hierunter versteht der Fachmann freie Isocyanat-Gruppen der allgemeinen Struktur -N=C=O) enthalten. Einfachste und wichtigste Vertreter dieser Polyisocyanate sind die Diisocyanate. Diese haben die allgemeinen Struktur O=C=N-R-N=C=O, wobei R üblicherweise für aliphatische, alicyclische und/oder aromatische Reste steht.

Aus Polyisocyanaten lassen sich wegen der Mehrfachfunktionalität (≥ 2 Isocyanat-Gruppen) eine Vielzahl von Polymeren (z.B. Polyurethane, Polyharnstoffe, Polyuretdione, Polycarbodiimide und Polyisocyanurate) und niedermolekularen Verbindungen (z.B. Urethanprepolymere oder solche mit Uretdion-, Isocyanurat-, Allophanat-, Biuret-, Iminooxadiazindion- und/oder Oxadiazintrionstruktur) herstellen.

Wenn im Zusammenhang mit der vorliegenden Erfindung allgemein von "Polyisocyanaten" die Rede ist, so sind damit monomere und/oder oligomere Polyisocyanate gemeint. Zum Verständnis vieler Aspekte der Erfindung ist es jedoch wichtig, zwischen monomeren Diisocyanaten und oligomeren Polyisocyanaten zu unterscheiden. Wenn hier von "oligomeren Polyisocyanaten" die Rede ist, dann sind damit Polyisocyanate gemeint, die aus mindestens zwei monomeren Diisocyanatmolekülen aufgebaut sind, d.h. es sind Verbindungen, die ein Reaktionsprodukt aus mindestens zwei monomeren Diisocyanatmolekülen darstellen oder enthalten. Bevorzugt ist das "oligomere Polyisocyanat" aus 2 bis 20, oder bevorzugt aus 2 bis 10 monomeren Diisocyanatmolekülen aufgebaut.

Die Herstellung oligomerer Polyisocyanate aus monomeren Diisocyanaten wird hier auch als Modifizierung monomerer Diisocyanate bezeichnet. Diese "Modifizierung", wie hier verwendet, bedeutet dabei die Reaktion monomerer Diisocyanate zu oligomeren Polyisocyanaten mit Uretdion-, Isocyanurat, Allophanat-, Biuret-, Iminooxadiazindion- und/oder Oxadiazintrionstruktur. Insbesondere wenn Katalysatorlösungsmittel verwendet werden, die Hydroxylgruppen enthalten, können die erfindungsgemäß geeigneten oligomeren Polyisocyanate auch Urethan- und Allophanatstrukturen enthalten. Es ist aber bevorzugt, dass Allophanat- und Urethanstrukturen nur einen geringen Anteil an der Gesamtmenge der Strukturen, welche die Oligomerisierung bewirken, ausmachen.

So ist z.B. Hexamethylendiisocyanat (HDI) ein "monomeres Diisocyanat", da es zwei Isocyanat-Gruppen enthält und kein Reaktionsprodukt aus mindestens zwei Polyisocyanatmolekülen darstellt:

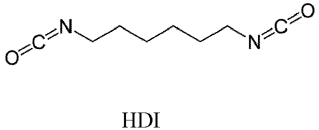

Reaktionsprodukte aus mindestens zwei HDI-Molekülen, die immer noch über mindestens zwei Isocyanat-Gruppen verfügen, sind demgegenüber "oligomere Polyisocyanate" im Sinne der Erfindung. Vertreter solcher "oligomere Polyisocyanate" sind ausgehend von dem monomeren HDI z.B. das HDI-Isocyanurat und das HDI-Biuret, die jeweils aus drei monomeren HDI Bausteinen aufgebaut sind:

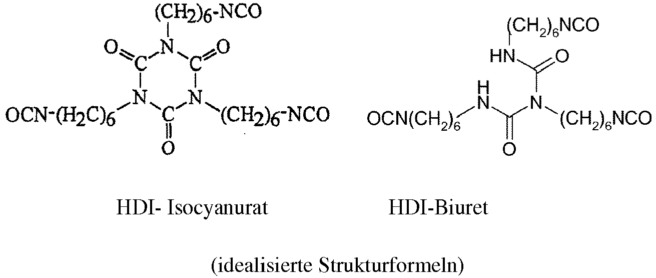

Unter "Polyisocyanatzusammensetzung A" wird im Sinne der Erfindung die Isocyanatkomponente im anfänglichen Reaktionsgemisch bezeichnet. Anders ausgedrückt handelt es sich dabei um die Summe aller Verbindungen im anfänglichen Reaktionsgemisch, die Isocyanat-Gruppen aufweisen. Die Polyisocyanatzusammensetzung A wird also als Edukt im erfindungsgemäßen Verfahren eingesetzt. Wenn hier von "Polyisocyanatzusammensetzung A" insbesondere von "Bereitstellen der Polyisocyanatzusammensetzung A" die Rede ist, dann bedeutet dies, dass die Polyisocyanatzusammensetzung A als Edukt existiert und eingesetzt wird.

Grundsätzlich kann die Polyisocyanatzusammensetzung A monomere und oligomere Polyisocyanate als Einzelkomponenten oder in jedem beliebigen Mischungsverhältnis enthalten.

Da oligomere Polyisocyanate aber weniger leicht flüchtig sind als monomere Polyisocyanate, kann es aus Gründen der Arbeitssicherheit wünschenswert sein, den Anteil an monomeren Polyisocyanaten in der Polyisocyanatzusammensetzung A möglichst weit zu reduzieren. Deswegen enthält die Polyisocyanatzusammensetzung A in einer bevorzugten Ausführungsform der vorliegenden Erfindung oligomere Polyisocyanate und ist arm an monomeren Diisocyanaten, wobei arm an monomeren Diisocyanaten bedeutet, dass die Polyisocyanatzusammensetzung A einen Gehalt an monomeren Diisocyanaten von ≤ 20 Gew.-%, bevorzugt < 5 Gew.-%, besonders bevorzugt < 1 Gew.-%, ganz besonders bevorzugt < 0,5 Gew.-%,aufweist.

"Monomerarm" und "arm an monomeren Polyisocyanaten" wird hier in Bezug auf die Polyisocyanatzusammensetzung A synonym verwendet.

Gemäß einer Ausführungsform der Erfindung besteht die Polyisocyanatzusammensetzung A vollständig oder zu mindestens 80, 85, 90, 95, 98, 99 oder 99,5 Gew.-%, jeweils bezogen auf das Gewicht der Polyisocyanatzusammensetzung A, aus oligomeren Polyisocyanaten. Bevorzugt besteht die Polyisocyanatzusammensetzung A vollständig oder zu mindestens 99,7, 99,8,oder 99,9 Gew.-%, jeweils bezogen auf das Gewicht der Polyisocyanatzusammensetzung A, aus oligomeren Polyisocyanaten. Dieser Gehalt an oligomeren Polyisocyanaten bezieht sich auf die Polyisocyanatzusammensetzung A, d.h. diese werden nicht etwa während des erfindungsgemäßen Verfahrens als Zwischenprodukt gebildet, sondern liegen bereits zu Beginn der Reaktion in der als Edukt eingesetzten Polyisocyanatzusammensetzung A vor.

Die eingesetzte Polyisocyanatzusammensetzung A ist monomerarm. In der Praxis lässt sich dies insbesondere dadurch erzielen, dass als Polyisocyanatzusammensetzung A oligomere Polyisocyanate eingesetzt werden, bei deren Herstellung sich an die eigentliche Modifizierungsreaktion in jedem Fall mindestens ein weiterer Verfahrensschritt zur Abtrennung der nicht umgesetzten überschüssigen monomeren Polyisocyanate anschließt. Diese Monomerenabtrennung kann besonders praxisgerecht nach an sich bekannten Verfahren vorzugsweise durch Dünnschichtdestillation im Hochvakuum oder durch Extraktion mit geeigneten gegenüber Isocyanatgruppen inerten Lösungsmitteln, beispielsweise aliphatischen oder cycloaliphatischen Kohlenwasserstoffen wie Pentan, Hexan, Heptan, Cyclopentan oder Cyclohexan, erfolgen.

Gemäß einer Ausführungsform der Erfindung wird die erfindungsgemäße Polyisocyanatzusammensetzung A durch Modifizierung monomerer Polyisocyanate mit anschließender Abtrennung nicht umgesetzter Monomere erhalten.

Gemäß einer Ausführungsform der Erfindung enthält die Polyisocyanatzusammensetzung A oligomere Polyisocyanate und weist 20, 15, 10, 5, 4, 3, 2, 1 oder 0,5 Gew.-%, jeweils bezogen auf das Gewicht der Polyisocyanatzusammensetzung A, monomere Polyisocyanate auf. Bevorzugt enthält die Polyisocyanatzusammensetzung A oligomere Polyisocyanate und weist höchstens 0,3, 0,2 oder 0,1 Gew.-%, jeweils bezogen auf das Gewicht der Polyisocyanatzusammensetzung A, monomere Polyisocyanate auf.

Gemäß einer besonderen Ausführungsform der Erfindung wird eine Polymerzusammensetzung A, die oligomere Polyisocyanate enthält und frei oder im Wesentlichen frei von monomeren Polyisocyanaten, ist eingesetzt. Im Wesentlichen frei bedeutet dabei, dass der Gehalt an monomeren Polyisocyanaten höchstens 0,5 Gew.-%, bevorzugt höchstens 0,3, 0,2 oder 0,1 Gew.-%, jeweils bezogen auf das Gewicht der Polyisocyanatzusammensetzung A, beträgt. Überraschenderweise führt dies zu einem deutlich geringeren Volumenschrumpf bei der Vernetzung. Die geringere Exothermie dieser Reaktion erlaubt es zudem, trotz schnellerer und drastischerer Reaktionsbedingungen immer noch hochwertige Polyisocyanuratkunststoffe erhalten zu können. Zudem haben Polyisocyanate mit geringen Monomergehalt ein geringeres Gefahrenpotential, was deren Handhabung und Verarbeitung sehr vereinfacht.

Andererseits kann durch den gezielten Zusatz von monomeren Polyisocyanaten die Viskosität der Polyisocyanatzusammensetzung A an die erforderlichen Prozessbedingungen einfach angepasst werden. Dabei wirken die zugesetzten Monomere als Reaktivverdünner und werden bei der Vernetzung in die Polymermatrix mit eingebaut.

Gemäß einer anderen bevorzugten Ausführungsform des erfindungsgemäßen Verfahrens wird eine Polyisocyanatzusammensetzung A eingesetzt, die reich an monomeren Polyisocyanaten ist. Eine solche Polyisocyanatzusammensetzung enthält große Anteile an monomeren Isocyanaten. Diese Anteile liegen bevorzugt bei wenigstens 20 Gew.-%, stärker bevorzugt bei wenigstens 40 Gew.-%, noch stärker bevorzugt bei wenigstens 60 Gew.-% und am stärksten bevorzugt bei wenigstens 80 Gew.-%.

Gemäß einer weiteren besonderen Ausführungsform der Erfindung kann sowohl eine monomerarme als auch eine monomerreiche Polyisocyanatzusammensetzung A ein oder mehrere monomere Fremddiisocyanate enthalten. Hierbei bedeutet monomeres Fremddiisocyanat, dass es sich von den monomeren Polyisocyanaten, welche den größten Anteil an den in der Polyisocyanatzusammensetzung A enthaltenen monomeren Polyisocyanaten oder den monomeren Polyisocyanaten, die zur Herstellung der in der Polyisocyanatzusammensetzung A enthaltenen oligomeren Polyisocyanaten verwendet wurden, unterscheidet. Eine Zugabe von monomerem Fremddiisocyanat kann zur Erzielung spezieller technischer Effekte, wie z.B. einer besonderen Härte, einer gewünschten Elastizität oder Dehnung, einer gewünschten Glasübergangstemperatur oder Viskosität, bei der Verarbeitung vorteilhaft sein. Besonders praxisgerechte Ergebnisse stellen sich ein, wenn die Polyisocyanatzusammensetzung A einen Anteil an monomeren Fremddiisocyanat in der Polyisocyanatzusammensetzung A von höchstens 49 Gew.-%, insbesondere höchstens 25 Gew.-% oder höchstens 10 Gew.-%, jeweils bezogen auf das Gewicht der Polyisocyanatzusammensetzung A, aufweist. Vorzugsweise weist die Polyisocyanatzusammensetzung A einen Gehalt an monomeren Fremddiisocyanat von höchstens 5 Gew.-%, vorzugsweise höchstens 2,0 Gew.-%, besonders bevorzugt höchstens 1,0 Gew.-%, jeweils bezogen auf das Gewicht der Polyisocyanatzusammensetzung A, auf.

Gemäß einer weiteren besonderen Ausführungsform des erfindungsgemäßen Verfahrens, kann die Polyisocyanatzusammensetzung A monomere Monoisocyanate mit einer Isocyanatfunktionalität von 1 oder monomere Isocyanate mit einer Isocyanatfunktionalität größer 2, d.h. mit mehr als zwei Isocyanatgruppen pro Molekül, enthalten. Die Zugabe von monomeren Monoisocyanaten mit einer Isocyanatfunktionalität von 1 oder monomeren Isocyanaten mit einer Isocyanatfunktionalität größer zwei hat sich als vorteilhaft erwiesen, um die Netzwerkdichte und/oder Glasübergangstemperatur des Polyisocyanuratkunststoffs zu beeinflussen. Die mittlere Isocyanatfunktionalität der Polyisocyanatzusammensetzung A ist dabei größer 1, bevorzugt größer 1,25, insbesondere größer 1,5, besonders bevorzugt größer 1,75 und ganz besonders bevorzugt größer 2. Die mittlere Isocyanatfunktionalität der Polyisocyanatzusammensetzung A lässt sich berechnen, indem die Summe der Isocyanatfunktionalitäten aller in der Polyisocyanatzusammensetzung A enthaltenen Polyisocyanatmoleküle durch die Anzahl der in der Polyisocyanatzusammensetzung A enthaltenen Polyisocyanatmoleküle geteilt wird. Besonders praxisgerechte Ergebnisse stellen sich ein, wenn die Polyisocyanatzusammensetzung A einen Anteil an monomeren Monoisocyanaten mit einer Isocyanatfunktionalität von 1 oder monomeren Isocyanaten mit einer Isocyanatfunktionalität größer zwei in der Polyisocyanatzusammensetzung A von höchstens 20 Gew.-%, insbesondere höchstens 15 Gew.-% oder höchstens 10 Gew.-%, jeweils bezogen auf das Gewicht der Polyisocyanatzusammensetzung A, aufweist. Vorzugsweise weist die Polyisocyanatzusammensetzung A einen Gehalt an monomeren Monoisocyanaten mit einer Isocyanatfunktionalität von 1 oder monomeren Isocyanaten mit einer Isocyanatfunktionalität größer 2 von höchstens 5 Gew.-%, vorzugsweise höchstens 2,0 Gew.-%, besonders bevorzugt höchstens 1,0 Gew.-%, jeweils bezogen auf das Gewicht der Polyisocyanatzusammensetzung A, auf. Vorzugsweise wird bei der erfindungsgemäßen Trimerisierungsreaktion kein monomeres Monoisocyanat mit einer Isocyanatfunktionalität von 1 oder monomeres Isocyanat mit einer Isocyanatfunktionalität größer 2 mitverwendet.

Die hier beschriebenen oligomeren Polyisocyanate werden üblicherweise durch Modifizierung einfacher aliphatischer, cycloaliphatischer, araliphatischer und/oder aromatischer monomerer Diisocyanate oder Mischungen solcher monomeren Diisocyanate erhalten.

Die oligomeren Polyisocyanate können erfindungsgemäß insbesondere Uretdion-, Urethan-, Isocyanurat-, Allophanat-, Biuret-, Iminooxadiazindion- und/oder Oxadiazintrionstruktur aufweisen. Gemäß einer Ausführungsform der Erfindung weisen die oligomeren Polyisocyanate mindestens eine der folgenden oligomeren Strukturtypen oder deren Gemische auf:

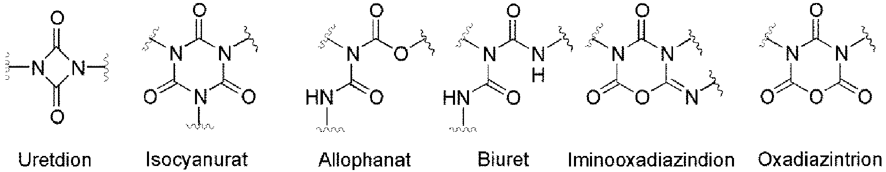

Überraschend hat sich herausgestellt, dass es vorteilhaft sein kann, oligomere Polyisocyanate einzusetzen, die eine Mischung aus mindestens zwei oligomeren Polyisocyanaten darstellen, wobei sich die mindestens zwei oligomeren Polyisocyanate in ihrer Struktur unterscheiden. Die Struktur ist vorzugsweise ausgewählt aus der Gruppe bestehend aus Uretdion-, Urethan-, Isocyanurat-, Allophanat-, Biuret-, Iminooxadiazindion- und Oxadiazintrionstruktur oder Mischungen von mindestens zwei hieraus. Derartige Ausgangsmischungen können insbesondere im Vergleich zu Trimerisierungsreaktionen mit oligomeren Polyisocyanaten nur einer definierten Struktur zu einer Beeinflussung des Tg-Wertes führen, was für viele Anwendungen vorteilhaft ist.

Bevorzugt wird im erfindungsgemäßen Verfahren eine Polyisocyanatzusammensetzung A, die aus mindestens einem oligomeren Polyisocyanat mit Biuret-, Allophanat-, Isocyanurat- und/oder Iminooxadiazindionstruktur und Mischungen davon besteht, eingesetzt. Bevorzugt wird im erfindungsgemäßen Verfahren eine Polyisocyanatzusammensetzung A eingesetzt, die höchstens 20 mol-%, bevorzugt höchstens 10 mol-%, besonders bevorzugt höchstens 5 mol-%, ganz besonders bevorzugt höchstens 2 mol-% und insbesondere höchstens 1 mol-%oligomere Polyisocyanate mit Urethanstruktur, wie beispielsweise Urethanprepolymere, enthält. In einer besonders bevorzugten Ausführungsform der Erfindung ist die Polyisocyanatzusammensetzung A aber unter Einhaltung der vorgenannten Obergrenzen nicht vollständig frei von Urethan- und Allophanatgruppen. Bevorzugt enthält die Polyisocyanatzusammensetzung A wenigstens 0,1 mol-% Urethan- und/oder Allophanatgruppen.

Gemäß einer anderen Ausführungsform handelt es sich bei der Polyisocyanatzusammensetzung A, welche oligomere Polyisocyanate enthält, um eine solche, die nur eine einzelne definierte oligomere Struktur, beispielsweise ausschließlich oder größtenteils Isocyanuratstruktur, enthält. In der Regel liegen in der Polyisocyanatzusammensetzung A herstellungsbedingt aber immer mehrere unterschiedliche oligomere Strukturen nebeneinander vor.

Im Rahmen der vorliegenden Erfindung wird eine Polyisocyanatzusammensetzung A, als Polyisocyanatzusammensetzung einer einzelnen definierten oligomeren Struktur angesehen, wenn eine oligomere Struktur ausgewählt aus der Gruppe bestehend aus Uretdion-, Urethan-, Isocyanurat-, Allophanat-, Harnstoff-, Biuret-, Iminooxadiazindion- und Oxadiazintrionstrukturen zu mindestens 50 mol-%, vorzugsweise mindestens 60 mol-%, bevorzugt mindestens 70 mol-%, besonders bevorzugt mindestens 80 mol-%, insbesondere mindestens 90 mol-%, jeweils bezogen auf die Summe aller vorliegenden oligomeren Strukturen aus der Gruppe, bestehend aus Uretdion-, Urethan-, Isocyanurat-, Allophanat-, Harnstoff-, Biuret-, Iminooxadiazindion- und Oxadiazintrionstruktur in der Polyisocyanatzusammensetzung A, vorliegt. Im erfindungsgemäßen Verfahren wird somit gemäß einer weiteren Ausführungsform eine Polyisocyanatzusammensetzung A einer einzelnen definierten oligomeren Struktur eingesetzt, wobei die oligomere Struktur aus der Gruppe bestehend aus Uretdion, Isocyanurat-, Allophanat-, Biuret-, Iminooxadiazindion- und Oxadiazintrionstrukturen ausgewählt ist.

Gemäß einer weiteren Ausführungsform handelt es sich bei den oligomeren Polyisocyanaten um solche, die hauptsächlich eine Isocyanuratstruktur aufweisen, und die oben genannten Uretdion-, Urethan-, Allophanat-, Harnstoff-, Biuret-, Iminooxadiazindion- und/oder Oxadiazintrionstruktur lediglich als Nebenprodukte enthalten dürfen. So sieht eine Ausführungsform der Erfindung den Einsatz einer Polymerzusammensetzung A einer einzelnen definierten oligomeren Struktur vor, wobei die oligomere Struktur eine Isocyanuratstruktur ist und zu mindestens 50 mol-%, vorzugsweise mindestens 60 mol-%, bevorzugt mindestens 70 mol-%, besonders bevorzugt mindestens 80 mol-%, insbesondere mindestens 90 mol-%, jeweils bezogen auf die Summe der vorliegenden oligomeren Strukturen aus der Gruppe, bestehend aus Uretdion-, Urethan-, Isocyanurat-, Allophanat-, Harnstoff-, Biuret-, Iminooxadiazindion- und Oxadiazintrionstruktur in der Polyisocyanatzusammensetzung A, vorliegt.

Es ist erfindungsgemäß ebenfalls möglich oligomere Polyisocyanate einzusetzen, die weitestgehend keine Isocyanuratstruktur aufweisen, und hauptsächlich mindestens einen der oben genannten Uretdion-, Biuret-, Iminooxadiazindion- und/oder Oxadiazintrion-Strukturtypen enthalten. Gemäß einer besonderen Ausführungsform der Erfindung besteht die Polyisocyanatzusammensetzung A zu mindestens 50 mol-%, vorzugsweise mindestens 60 mol-%, bevorzugt mindestens 70 mol-%, besonders bevorzugt mindestens 80 mol-%, insbesondere mindestens 90 mol-%, jeweils bezogen auf die Summe der vorliegenden oligomeren Strukturen aus der Gruppe, bestehend aus Uretdion-, Urethan-, Isocyanurat-, Allophanat-, Harnstoff-, Biuret-, Iminooxadiazindion- und Oxadiazintrionstruktur in der Polyisocyanatzusammensetzung A, aus oligomeren Polyisocyanaten, die einen Strukturtyp ausgewählt aus der Gruppe bestehend aus Uretdion-, Allophanat-, Biuret-, Iminooxadiazindion- und/oder Oxadiazintrionstruktur aufweisen.

Eine weitere Ausführungsform der Erfindung sieht den Einsatz einer isocyanuratarmen Polyisocyanatzusammensetzung A vor, welche, bezogen auf die Summe der vorliegenden oligomeren Strukturen aus der Gruppe, bestehend aus Uretdion-, Urethan-, Isocyanurat-, Allophanat-, Biuret-, Iminooxadiazindion- und Oxadiazintrionstruktur in der Polyisocyanatzusammensetzung A, weniger als 50 mol-%, vorzugsweise weniger als 40 mol-%, bevorzugt weniger als 30 mol-%, besonders bevorzugt weniger als 20 mol-%, 10 mol-% oder 5 mol-% Isocyanuratstrukturen aufweist.

Eine weitere Ausführungsform der Erfindung sieht den Einsatz einer Polyisocyanatzusammensetzung A eines einzelnen definierten oligomeren Strukturtyps vor, wobei der oligomere Strukturtyp ausgewählt ist aus der Gruppe bestehend aus Uretdion-, Biuret-, Iminooxadiazindion- und/oder Oxadiazintrionstruktur und dieser Strukturtyp zu mindestens 50 mol-%, vorzugsweise 60 mol-%, bevorzugt 70 mol-%, besonders bevorzugt 80 mol-%, insbesondere 90 mol-%, bezogen auf die Summe der vorliegenden oligomeren Strukturen aus der Gruppe, bestehend aus Uretdion-, Urethan-, Isocyanurat-, Allophanat-, Biuret, Iminooxadiazindion- und Oxadiazintrionstruktur in der Polyisocyanatzusammensetzung A, vorliegt.

Die Anteile an Uretdion-, Urethan-, Isocyanurat-, Allophanat-, Harnstoff-, Biuret-, Iminooxadiazindion- und/oder Oxadiazintrionstruktur in der Polyisocyanatzusammensetzung A können beispielsweise aus den Integralen protonenentkoppelter 13C-NMR-Spektren errechnen, da die genannten oligomeren Strukturen charakteristische Signale liefern, und beziehen sich jeweils auf die Summe an vorliegenden Uretdion-, Urethan-, Isocyanurat-, Allophanat-, Harnstoff-, Biuret-, Iminooxadiazindion- und/oder Oxadiazintrionstrukturen in der Polyisocyanatzusammensetzung A.

Unabhängig vom zugrunde liegenden oligomeren Strukturtyp (Uretdion-, Urethan-, Isocyanurat-, Allophanat-, Harnstoff-, Biuret-, Iminooxadiazindion- und/oder Oxadiazintrionstruktur) weist die beim erfindungsgemäßen Verfahren einzusetzende Polyisocyanatzusammensetzung A vorzugsweise eine (mittlere) NCO-Funktionalität von > 1,0 bis 6,0, bevorzugt 1,5 bis 5,0, besonders bevorzugt von 2,0 bis 4,5 auf.

Besonders praxisgerechte Ergebnisse stellen sich ein, wenn die erfindungsgemäß einzusetzende Polyisocyanatzusammensetzung A einen Gehalt an Isocyanatgruppen von 8,0 bis 60,0 Gew.-% aufweist. Als besonders praxisgerecht hat es sich erwiesen, wenn die erfindungsgemäße Polyisocyanatzusammensetzung A einen Gehalt an Isocyanatgruppen von 14,0 bis 30,0 Gew.-%, jeweils bezogen auf das Gewicht der Polyisocyanatzusammensetzung A, aufweist.

Herstellverfahren für oligomere Polyisocyanate mit Uretdion-, Urethan-, Isocyanurat-, Allophanat-, Urea-, Biuret-, Iminooxadiazindion- und/oder Oxadiazintrionstruktur sind beispielsweise in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 und DE-A 3 928 503 oder in EP-A 0 336 205, EP-A 0 339 396 und EP-A 0 798 299 beschrieben.

Gemäß einer zusätzlichen oder alternativen Ausführungsform der Erfindung ist die Polyisocyanatzusammensetzung A dadurch definiert, dass sie oligomere Polyisocyanate enthält, die aus monomeren Polyisocyanaten unabhängig von der Art der verwendeten Modifizierungsreaktion unter Einhaltung eines Oligomerisierungsgrades von 5 bis 90 %, vorzugsweise 30 bis 75 %, besonders bevorzugt 40 bis 60 %, erhalten wurden. Unter "Oligomerisierungsgrad" ist dabei der Prozentsatz der in der Ausgangsmischung ursprünglich vorhandenen Isocyanatgruppen zu verstehen, der während des Herstellprozesses der Polyisocyanatzusammensetzung A unter Bildung von Uretdion-, Urethan-, Isocyanurat-, Allophanat-, Urea-, Biuret-, Iminooxadiazindion- und/oder Oxadiazintrionstrukturen umgesetzt wird.

Geeignete Ausgangsverbindungen für die oligomeren Polyisocyanate sind beliebige, auf verschiedene Weise, beispielsweise durch Phosgenierung in der Flüssig- oder Gasphase oder auf phosgenfreiem Weg, wie z.B. durch thermische Urethanspaltung, zugängliche monomere Polyisocyanate. Besonders gute Ergebnisse stellen sich ein, wenn es sich bei den monomeren Polyisocyanaten um monomere Diisocyanate handelt. Bevorzugte monomere Diisocyanate sind solche, die ein Molekulargewicht im Bereich von 140 bis 400 g/mol aufweisen, mit aliphatisch, cycloaliphatisch, araliphatisch und/oder aromatisch gebundenen Isocyanatgruppen, wie z. B. 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI), 2,4'- und 4,4'-Diisocyanatodicyclohexylmethan (H12MDI), 1-Isocyanato-1-methyl-4(3)-isocyanatomethylcyclohexan, 1,3- und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'- Diisocyanato-2,2',5,5'-tetra-methyl-1,1'-bi(cyclohexyl), 1,8-Diisocyanato-p-menthan, 1,3-Diisocyanato-adamantan, 1,3-Dimethyl-5,7-diisocyanatoadamantan, 1,3- und 1,4-Bis-(isocyanatomethyl)benzol (Xyxlylendiisocyanat; XDI), 1,3- und 1,4-Bis(1-isocyanato-1-methyl-ethyl)-benzol (TMXDI) und Bis(4-(1-isocyanato-1-methylethyl)phenyl)-carbonat, 2,4- und 2,6-Diisocyanatotoluol (TDI), 2,4'- und 4,4'-Diisocyanatodiphenylmethan (MDI), 1,5-Diisocyanatonaphthalin sowie beliebige Gemische solcher Diisocyanate. Weitere ebenfalls geeignete Diisocyanate finden sich darüber hinaus beispielsweise in Justus Liebigs Annalen der Chemie Band 562 (1949) S. 75 - 136.

Ferner können in dem erfindungsgemäßen Verfahren auch klassische aliphatische oder aromatische Isocyanat-Endgruppentragende Prepolymere, wie beispielsweise aliphatische oder aromatische Isocyanat- Endgruppentragende Polyether-, Polyester-, Polycarbonat-Prepolymere als Mono- und Polyisocyanate in der Polyisocyanatzusammensetzung A eingesetzt werden.

Geeignete monomere Monoisocyanate, die in der Polyisocyanatzusammensetzung A gegebenenfalls eingesetzt werden können, sind beispielsweise n-Butylisocyanat, n-Amylisocyanat, n-Hexylisocyanat, n-Heptylisocyanat, n-Octylisocyanat, Undecylisocyanat, Dodecylisocyanat, Tetradecylisocyanat, Cetylisocyanat, Stearylisocyanat, Cyclopentylisocyanat, Cyclohexylisocyanat, 3- bzw. 4-Methylcyclohexylisocyanat oder beliebige Gemische solcher Monoisocyanate. Als monomeres Isocyanat mit einer Isocyanatfunktionalität größer zwei, das der Polyisocyanatzusammensetzung A gegebenenfalls zugesetzt werden kann, sei beispielhaft 4-Isocyanatomethyl-1,8-octandiisocyanat (Triisocyanatononan; TIN) genannt.

Gemäß einer Ausführungsform der Erfindung enthält die Polyisocyanatzusammensetzung A höchstens 80 Gew.-%, insbesondere höchstens 50 Gew.-%, höchstens 25 Gew.-%, höchstens 10 Gew.-%, höchstens 5 Gew.-% oder höchstens 1 Gew.-%, jeweils bezogen auf das Gewicht der Polyisocyanatzusammensetzung A, an aromatischen Polyisocyanaten. Wie hier verwendet, bedeutet "aromatisches Polyisocyanat" ein Polyisocyanat, welches mindestens eine aromatisch gebundene Isocyanatgruppe aufweist. Unter aromatisch gebundenen Isocyanat-Gruppen werden Isocyanat-Gruppen verstanden, die an einen aromatischen Kohlenwasserstoffrest gebunden sind.

Gemäß einer bevorzugten Ausführungsform des erfindungsgemäßen Verfahrens wird eine Polyisocyanatzusammensetzung A eingesetzt, die ausschließlich aliphatisch und/oder cycloaliphatisch gebundene Isocyanat-Gruppen aufweist. Unter aliphatisch bzw. cycloaliphatisch gebundenen Isocyanat-Gruppen werden Isocyanat-Gruppen verstanden, die an einen aliphatischen bzw. cycloaliphatischen Kohlenwasserstoffrest gebunden sind.

Gemäß einer anderen bevorzugten Ausführungsform des erfindungsgemäßen Verfahrens wird eine Polyisocyanatzusammensetzung A eingesetzt, die aus einem oder mehreren oligomeren Polyisocyanaten besteht oder diese enthält, wobei die ein oder mehreren oligomeren Polyisocyanate ausschließlich aliphatisch und/oder cycloaliphatisch gebundene Isocyanat-Gruppen aufweisen.

Gemäß einer weiteren Ausführungsform der Erfindung besteht die Polyisocyanatzusammensetzung A zu mindestens 55, 70, 80, 85, 90, 95, 98 oder 99 Gew.-%, jeweils bezogen auf das Gewicht der Polyisocyanatzusammensetzung A, aus oligomeren Polyisocyanaten, die ausschließlich aliphatisch und/oder cycloaliphatisch gebundene Isocyanat-Gruppen aufweisen. Praktische Versuche haben gezeigt, dass sich besonders gute Ergebnisse mit Polyisocyanatzusammensetzungen A erzielen lassen, bei denen die darin enthaltenen oligomeren Polyisocyanate ausschließlich aliphatisch und/oder cycloaliphatisch gebundene Isocyanat-Gruppen aufweisen.

Gemäß einer besonders bevorzugten Ausführungsform des erfindungsgemäßen Verfahrens wird eine Polyisocyanatzusammensetzung A eingesetzt, die aus einem oder mehreren oligomeren Polyisocyanaten besteht oder diese enthält, wobei die ein oder mehreren oligomeren Polyisocyanate auf Basis von 1,4-Diisocyanatobutan (BDI), 1,5-Diisocyanatopentan (PDI), 1,6-Diisocyanatohexan (HDI), Isophorondiisocyanat (IPDI) oder 4,4'-Diisocyanatodicyclohexylmethan (H12MDI) oder deren Mischungen aufgebaut sind.

### Formkörper

Bevorzugt liegt der erfindungsgemäße gefärbte Kunststoff als Formkörper vor. Der Begriff "Formkörper" bezeichnet in der vorliegenden Anmeldung einen Körper, dessen Ausdehnung in jeder der drei Dimensionen wenigstens 1 mm, bevorzugt wenigstens 2 mm, stärker bevorzugt zusätzlich in wenigstens zwei der drei Dimensionen wenigstens 20 mm und am stärksten bevorzugt in wenigstens zwei der drei Dimensionen 50 mm beträgt.

### Farbstoff

Ein "Farbstoff" im Sinne der vorliegende Patentanmeldung ist jede Verbindung, die geeignet ist, der vernetzten Polyisocyanatzusammensetzung A eine Farbe zu geben, die von der Farbe der vernetzten Polyisocyanatzusammensetzung A in Abwesenheit des Farbstoffs abweicht. Farbstoffe können in der Polyisocyanatzusammensetzung A löslich sein, erfindungsgemäß liegen sie aber als unlösliche Partikel vor. Letztere werden in dieser Anmeldung auch als "Pigmente" bezeichnet. Pigmente haben einen Durchmesser von höchstens 200 µm, bevorzugt höchstens 100 µm, stärker bevorzugt höchstens 10 µm und am stärksten bevorzugt höchstens 5 µm. Die Partikeldurchmesser werden bevorzugt mittels Licht- oder Elektronenmikroskopie ermittelt.

Erfindungsgemäß ist es erforderlich, das Pigment vor der katalytischen Vernetzung der Polyisocyanatzusammensetzung A so mit dieser zu vermischen, dass dieses darin gleichmäßig verteilt vorliegt und so eine gleichmäßige Einfärbung des durch die Vernetzung entstehenden Kunststoffs ermöglicht. Pigmente werden in der Polyisocyanatzusammensetzung A dispergiert. Hierbei werden, wenn nötig, dem Fachmann bekannte Dispergiermittel verwendet. Bevorzugt beinhaltet der gefärbte Kunststoff das Pigment in einer Menge in einem Bereich von 0,01 bis 20 Gew.-%, oder bevorzugt in einem Bereich von 0,05 bis 15 Gew.-%, oder bevorzugt in einem Bereich von 0,1 bis 10 Gew.-%, oder bevorzugt in einem Bereich von 0,2 bis 4 Gew.-%, bezogen auf das Gesamtgewicht des gefärbten Kunststoffs.

In einer bevorzugten Ausführungsform ist das Pigment ein anorganisches Pigment, beispielsweise ein Metallpulver (Aluminium, Kupfer, α-Messing), ein Pigment aus der Klasse der Magnetpigmente (z.B. γ-Fe2O3, Fe₃O₄/Fe₂O₃, Cr₂O₃) oder anderen Oxiden wie beispielsweise Titandioxid, Oxidhydraten, Sulfiden, Sulfaten, Carbonaten und Silicaten der Übergangsmetalle. Dieses anorganische Pigment ist vorzugsweise Ruß oder Zinksulfid.

In einer weiteren bevorzugten Ausführungsform der vorliegenden Erfindung ist das Pigment ein organisches Pigment. Dieses organische Pigment kann ein natürliches oder synthetisches Pigment sein.

In einer weiteren bevorzugten Ausführungsform werden lösliche organische Farbstoffe und unlösliche organische und / oder anorganische Farbstoffe (Pigmente) zur Herstellung der erfindungsgemäßen Kunststoffe auf Basis vernetzter Polyisocyanate gemischt.

### Eigenschaften des erfindungsgemäßen Kunststoffs

Gemäß einer Ausführungsform des erfindungsgemäßen Verbundwerkstoffes beträgt der Stickstoffgehalt der vernetzten Polyisocyanatzusammensetzung A, damit ist der gesamte darin gebundene oder enthaltene Stickstoff geteilt durch die Gesamtmenge Polymer (beides bezogen auf das Gewicht) gemeint, mindestens 9 Gew.-%, bevorzugt mindestens 10 Gew.-%, besonders bevorzugt mindestens 11 Gew.-%, größer 12 Gew.-%, größer 13 und größer 14 Gew.-% bzw. größer 15 Gew.-% und am stärksten bevorzugt größer 16 Gew.-%.

Der Stickstoffgehalt des Kunststoffs kann mit Hilfe des Elementaranalyse-Geräts "vario EL cube" der Firma Elementar Americas, INC., bestimmt werden. Dabei wird ein kleiner Teil des Materials von dem Kunststoff abgeschabt und in dem Analysegerät analysiert. Von einem Teil der entnommenen Probe wird zunächst der Gehalt an anorganischen, nicht brennbaren Materialien entsprechend der Norm DIN EN ISO 1172, Verfahren A, bestimmt.

Gemäß einer weiteren Ausführungsform des erfindungsgemäßen gefärbten Kunststoffs beträgt der Kohlenstoffgehalt der vernetzten Polyisocyanatzusammensetzung A, der gebunden in Isocyanuratgruppen vorliegt, bezogen auf den Gesamtkohlenstoffgehalt der Polymermatrix mindestens 8 %, bevorzugt mindestens 10 %, besonders bevorzugt mindestens 12 %, größer 15 %, größer 17 % und größer 19 % bzw. größer 20 % und am stärksten bevorzugt mehr als 23 % Kohlenstoff.

Der in Isocyanuratgruppen gebundene Kohlenstoffanteil kann beispielsweise aus den Integralen protonenentkoppelter ¹³C-NMR Spektren (MAS-NMR, Festkörper-NMR) errechnet werden, da die Kohlenstoffatome entsprechend ihrer Bindung charakteristische Signale liefern, und beziehen sich auf die Summe aller vorliegenden Kohlenstoffsignale.

In einer weiteren bevorzugten Ausführungsform beträgt die Gesamtkonzentration an Urethanen, Allophanaten, Alkoholen, Aminen, Thiolen, Thiourethanen, Thioallophanaten und Biureten im Harz des Verbundwerkstoffs bezogen auf die eingesetzte Polyisocyanatzusammensetzung A zwischen 0,1 Gew.-% und 20 Gew.-%.

Gemäß einer weiteren Ausführungsform der vorliegenden Erfindung beträgt in der vernetzten Polyisocyanatzusammensetzung A das Verhältnis der Summe aller Kohlenstoffatome gebunden in Isocyanurat- und Iminooxadiazindiongruppen und der Summe aller Kohlenstoffatome gebunden in Urethanen, Allophanaten, Thiolen, Thiourethanen, Thioallophanaten und Biuretten in der eingesetzten Polyisocyanatzusammensetzung A zwischen 500 und 1, bevorzugt zwischen 300 und 1, stärker bevorzugt zwischen 100 und 1, insbesondere zwischen 50 und 1 und am stärksten bevorzugt zwischen 25 und 1.

Die Anteile an Uretdion-, Urethan-, Isocyanurat-, Allophanat-, Biuret-, Iminooxadiazindion- und/oder Oxadiazintrionstrukturen in der vernetzten Polyisocyanatzusammensetzung A können beispielsweise aus den Integralen protonenentkoppelter ¹³C-NMR-Spektren errechnet werden, da die genannten oligomeren Strukturen charakteristische Signale liefern. Sie beziehen sich jeweils auf die Summe an vorliegenden Uretdion-, Urethan-, Isocyanurat-, Allophanat-, Biuret-, Iminooxadiazindion- und/oder Oxadiazintrionstrukturen in der Polyisocyanatzusammensetzung A.

Gemäß einer weiteren Ausführungsform der Erfindung beträgt die Gesamtkonzentration an Urethanen, Allophanaten, Alkoholen, Aminen, Thiolen, Thiourethanen, Thioallophanaten, Harnstoffen und Biuretten bezogen auf die vernetzten Polyisocyanatzusammensetzung A im erfindungsgemäßen gefärbten Kunststoff zwischen 20 Gew.-% und 0,1 Gew.-%, bevorzugt zwischen 10 Gew.-% und 0,1 Gew.-% und insbesondere zwischen 5 Gew.-% und 0,1 Gew.-%.

Gemäß einer weiteren Ausführungsform der Erfindung hat der Kunststoff basierend auf vernetzten Polyisocyanaten einen Glaspunkt der ≤ dem Glaspunkt des nicht gefärbten Kunststoffes auf Basis von vernetzten Polyisocyanaten ist.

Gemäß einer weiteren Ausführungsform der Erfindung hat der Kunststoff basierend auf vernetzten Polyisocyanaten eine Dichte die ≥ der Dichte des nicht gefärbten Kunststoffes auf Basis von vernetzten Polyisocyanaten ist.

### Additive

Die nach dem erfindungsgemäßen Verfahren erhältlichen Polyisocyanurat-Kunststoffe- zeichnen sich bereits als solche, d. h. ohne Zusatz entsprechender Hilfs-und Zusatzmittel, durch eine sehr gute Lichtbeständigkeit bzw. Witterungsbeständigkeit aus. Dennoch kann der erfindungsgemäße Kunststoff aber auch übliche Additive enthalten. Hierzu gehören unter anderem Stabilisatoren wie Antioxidantien, Lichtschutzmittel, UV-Stabilisatoren, Antistatika, optische Aufheller, Wasser- und Säurefänger, oberflächenaktive Zusatzstoffe, Entschäumer, Verlaufsmittel, Rheologieadditive, Nukleierungsmittel, Transparenzverstärker, Flammhemmer und Flammschutzmittel, Füllstoffe, Metalldesaktivatoren, Slipadditive, Formtrenn- und Gleitmittel wie Gycerinmonostearat oder Calciumstearat, Nervonsäure sowie Weichmacher, Treibmittel (Gase, leicht verdampfende Lösungsmittel wie Pentan oder chemische Treibmittel wie Azocarbonamid, Benzolsulfonsäurehydrazid und Azobisisobutyronitril (AIBN)).

Diese Hilfs- und Zusatzmittel, ausgenommen Flammschutzmittel, liegen üblicherweise in einer Menge von weniger als 30 Gew.-%, vorzugsweise weniger als 10 Gew.-%, besonders bevorzugt bis zu 3 Gew.-%, bezogen auf die Polyisocyanatzusammensetzung A), im Polyisocyanurat-Kunststoff vor. Flammschutzmittel liegen üblicherweise in Mengen von höchstens 70 Gew.-%, vorzugsweise höchstens 50 Gew.-%, besonders bevorzugt höchstens 30 Gew.-%, berechnet als Gesamtmenge an eingesetzten Flammschutzmitteln bezogen auf das Gesamtgewicht der Polyisocyanatzusammensetzung A), im Polyisocyanurat-Kunststoff vor.

Geeignete UV-Stabilisatoren können vorzugsweise ausgewählt werden aus der Gruppe, bestehend aus Piperidinderivaten, wie z.B. 4-Benzoyloxy-2,2,6,6-tetramethylpiperidin, 4-Benzoyloxy-1,2,2,6,6-pentamethylpiperidin, Bis-(2,2,6,6-tetra-methyl-4-piperidyl)-sebacat, Bis(1,2,2,6,6-pentamethyl-1-4-piperidinyl)-sebacat, Bis-(2,2,6,6-tetramethyl-4-piperidyl)-suberat, Bis-(2,2,6,6-tetramethyl-4-piperidyl)-dodecandioat; Benzophenonderivaten, wie z.B. 2,4-Dihydroxy-, 2-Hydroxy-4-methoxy-, 2-Hydroxy-4-octoxy-, 2-Hydroxy-4-dodecyloxy- oder 2,2'-Dihydroxy-4-dodecyloxybenzophenon; Benztriazolderivaten, wie z.B. 2-(2H-Benzotriazol-2-yl)-4,6-di-tert-pentylphenol, 2-(2H-Benzotriazol-2-yl)-6-dodecyl-4-methylphenol, 2-(2H-Benzotriazol-2-yl)-4,6-bis(1-methyl-1-phenylethyl)phenol, 2-(5-Chlor-2H-benzotriazol-2-yl)-6-(1,1-dimethylethyl)-4-methylphenol, 2-(2H-benzotriazol-2-yl)-4-(1,1,3,3-tetramethylbutyl)phenol, 2-(2H-Benzotriazol-2-yl)-6-(1-methyl-1-phenylethyl)-4-(1,1,3,3-tetramethylbutyl)phenol, Isooctyl-3-(3-(2H-benzotriazol-2-yl)-5-(1,1-dimethylethyl)-4-hydroxyphenylpropionat), 2-(2H-Benzotriazol-2-yl)-4,6-bis(1,1-dimethylethyl)-phenol, 2-(2H-Benzotriazol-2-yl)-4,6-bis(1-methyl-l-phenylethyl)phenol, 2-(5-Chlor-2H-benzotriazol-2-yl)-4,6-bis(1,1-dimethylethyl)phenol; Oxalaniliden, wie z.B. 2-Ethyl-2'-ethoxy- oder 4-Methyl-4'-methoxyoxalanilid; Salicylsäureestern, wie z.B. Salicylsäurephenylester, Salicylsäure-4-tert-butylphenylester, Salicylsäure-4-tert-octylphenylester; Zimtsäureesterderivaten, wie z.B. α-Cyano-β-methyl-4-methoxyzimtsäuremethylester, α-Cyano-β-methyl-4-methoxyzimtsäurebutylester, α-Cyano-β-phenylzimtsäureethylester, α-Cyano-β-phenylzimtsäureisooctylester; und Malonesterderivaten, wie z.B. 4-Methoxy-benzylidenmalonsäuredimethylester, 4-Methoxybenzylidenmalonsäurediethylester, 4-Butoxy-benzylidenmalonsäuredimethylester. Diese bevorzugten Lichtstabilisatoren können sowohl einzeln als auch in beliebigen Kombinationen untereinander zum Einsatz kommen.

Besonders bevorzugte UV-Stabilisatoren für die erfindungsgemäß herstellbaren Polyisocyanurat-Kunststoffe sind solche, die Strahlung einer Wellenlänge < 400 nm vollständig absorbieren. Hierzu zählen beispielsweise die genannten Benztriazolderivate. Ganz besonders bevorzugte UV-Stabilisatoren sind 2-(5-Chlor-2H-benzotriazol-2-yl)-6-(1,1-dimethylethyl)-4-methylphenol, 2-(2H-benzotriazol-2-yl)-4-(1,1,3,3-tetramethylbutyl)phenol und/oder 2-(5-Chlor-2H-benzotriazol-2-yl)-4,6-bis(1,1-dimethylethyl)phenol.

Gegebenenfalls werden ein oder mehrere der beispielhaft genannten UV-Stabilisatoren der Polyisocyanatzusammensetzung A) vorzugsweise in Mengen von 0,001 bis 3,0 Gew.-%, besonders bevorzugt 0,01 bis 2 Gew.-%, berechnet als Gesamtmenge an eingesetzten UV-Stabilisatoren bezogen auf das Gesamtgewicht der Polyisocyanatzusammensetzung A) zugesetzt.

Geeignete Antioxidantien sind vorzugsweise sterisch gehinderten Phenole, welche vorzugsweise ausgewählt werden können aus der Gruppe, bestehend aus Vitamin E, 2,6-Di-tert-butyl-4-methylphenol (Ionol) und Derivaten davon, Pentaerythrit-tetrakis(3-(3,5-di-tert-butyl-4-hydroxyphenyl)-propionat), Octadecyl-3-(3,5-di-tert-butyl-4-hydroxyphenyl)-propionat, Triethylen-glykol-bis(3-tert-butyl-4-hydroxy-5-methylphenyl)propionat, 2,2'-Thio-bis(4-methyl-6-tert-butylphenol) und 2,2'-Thiodiethyl-bis[3-(3,5-di-tert-butyl-4-hydroxyphenyl)propionat]. Diese können bei Bedarf sowohl einzeln als auch in beliebigen Kombinationen untereinander eingesetzt werden.

Diese Antioxidantien werden vorzugsweise in Mengen von 0,01 bis 3,0 Gew.-%, besonders bevorzugt 0,02 bis 2,0 Gew.-%, berechnet als Gesamtmenge an eingesetzten Antioxidantien bezogen auf das Gesamtgewicht der Polyisocyanatzusammensetzung A) eingesetzt.

Die erfindungsgemäßen Formulierungen können, abgesehen von den geringen Mengen gegebenenfalls mitzuverwendender Katalysatorlösungsmittel, lösungsmittelfrei sein.

Als weitere Hilfs- und Zusatzmittel können schließlich auch interne Formtrennmittel zugesetzt werden.

Bei diesen handelt es sich vorzugsweise um die als Formtrennmittel bekannten Perfluoralkyl- oder Polysiloxaneinheiten enthaltenden nichtionischen Tenside, quartäre Alkylammoniumsalze, wie z.B. Trimethylethylammoniumchlorid, Trimethylstearyl-ammoniumchlorid, Dimethylethylcetylammoniumchlorid, Triethyldodecylammoniumchlorid, Trioctylmethyl-ammoniumchlorid und Diethylcyclohexyldodecylammoniumchlorid, saure Mono- und Dialkylphosphate sowie Trialkylphosphate mit 2 bis 18 Kohlenstoffatomen im Alkylrest, wie z.B. Ethylphosphat, Diethylphosphat, Isopropylphosphat, Diisopropylphosphat, Butylphosphat, Dibutylphosphat, Octylphosphat, Dioctylphosphat, Isodecylphosphat, Diisodecylphosphat, Dodecylphosphat, Didodecylphosphat, Tridecanolphosphat, Bis(tridecanol)-phosphat, Stearylphospat, Distearylphosphat, Wachse wie beispielsweise Bienenwachs, Montanwachs oder Polyethylenoligomere, Metallsalze und Ester von Öl- und Fettsäuren wie Bariumstearat, Calciumstearat, Zinkstearat, Glycerinstearat und- laurat, Ester von aliphatischen verzweigten und unverzweigten Alkoholen mit 4 bis 36 Kohlenstoffatomen im Alkylrest und beliebige Gemische solcher Formtrennmittel.

Besonders bevorzugte Formtrennmittel sind die genannten Fettsäureester und deren -salze sowie saure Mono- und Dialkylphosphate, ganz besonders bevorzugt solche mit 8 bis 36 Kohlenstoffatomen im Alkylrest.

Interne Formtrennmittel werden beim erfindungsgemäßen Verfahren gegebenenfalls vorzugsweise in Mengen von 0,01 bis 15,0 Gew.-%, besonders bevorzugt 0,02 bis 10,0 Gew.-%, insbesondere 0,02 bis 5,0 Gew.-%, berechnet als Gesamtmenge an eingesetztem internen Formtrennmittel bezogen auf das Gesamtgewicht der Polyisocyanatzusammensetzung A) eingesetzt.

### Vernetzung

Die "Vernetzung" der Polyisocyanatzusammensetzung A ist ein Prozess, in dem die in der Polyisocyanatzusammensetzung A enthaltenen Isocyanatgruppen unter Ausbildung von Uretdion-, Isocyanurat-, Allophanat-, Biuret-, Iminooxadiazindion- und Oxadiazintrionstrukturen miteinander oder mit bereits vorliegenden Urethangruppen reagieren. Hierbei werden die in der Polyisocyanatzusammensetzung A ursprünglich vorliegenden Isocyanatgruppen verbraucht. Durch die Ausbildung der vorgenannten Gruppen werden die in Polyisocyanatzusammensetzung A enthaltenen monomeren und oligomeren Polyisocyanate vernetzt. Es entsteht der erfindungsgemäße Kunststoff. Vorzugsweise wird zur Beschleunigung der Vernetzung wenigstens einer der weiter unten in dieser Anmeldung definierten Katalysatoren verwendet.

Da die Isocyanuratbildung in Abhängigkeit vom verwendeten Katalysator häufig von Nebenreaktionen, beispielsweise der Dimerisierung zu Uretdionstrukturen oder der Trimerisierung unter Bildung von Iminoxadiazindionen (sogenannten asymmetrischen Trimerisaten) und bei Vorhandensein von Urethangruppen im Ausgangspolyisocyanat von Allophanatisierungsreaktionen, begleitet wird, sollen im Rahmen der vorliegenden Erfindung die Begriffe "Trimerisierung" und "Vernetzung" synonym auch für diese zusätzlich ablaufenden Nebenreaktionen stehen.

Das Aushärten der Polyisocyanatzusammensetzung A führt dazu, dass sich die in Uretdion-, Isocyanurat-, Biuret- und Iminooxadiazindionstrukturen gebundenen Stickstoffanteile bevorzugt auf mindestens 60 %, stärker bevorzugt auf mindestens 65 %, insbesondere bevorzugt auf mindestens 70 %, 75 % , 80 %, 85 %, 90 % und am stärksten bevorzugt auf mindestens 95 % des Gesamtstickstoffgehaltes der Polyisocyanatzusammensetzung A summieren. Hierbei ist zu berücksichtigen, dass erfindungsgemäß nur eine der vorgenannten Strukturen anwesend sein muss und abhängig von der Art des gewählten Vernetzungskatalysators eine oder mehrere der vorgenannten Strukturen auch vollständig fehlen können.

In einer Ausführungsform der Erfindung sind daher mindestens 60 %, stärker bevorzugt auf mindestens 65 %, insbesondere bevorzugt auf mindestens 70 %, 75 % , 80 %, 85 %, 90 % und am stärksten bevorzugt auf mindestens 95 % des Gesamtstickstoffgehaltes der Polyisocyanatzusammensetzung A nach Aushärtung in Uretdion-, Isocyanurat-, Biuret- und Iminooxadiazindionstrukturen gebunden.

Bevorzugt führt die Vernetzungsreaktion dazu, dass höchstens 20 %, bevorzugt höchstens 10 %, besonders bevorzugt höchstens 5 %, ganz besonders bevorzugt höchstens 2 % und insbesondere höchstens 1 % des Gesamtstickstoffgehaltes der Polyisocyanatzusammensetzung A in Urethan- und/oder Allophanatgruppen vorliegen.

In einer besonders bevorzugten Ausführungsform der Erfindung ist die ausgehärtete Polyisocyanatzusammensetzung A aber nicht vollständig frei von Urethan- und Allophanatgruppen. Bevorzugt enthält sie deswegen wenigstens 0,1 % Urethan- und/oder Allophanatgruppen bezogen auf den Gesamtstickstoffgehalt.

Gemäß einer besonderen Ausführungsform bedeutet Vernetzung jedoch, dass vorwiegend Cyclotrimerisierungen von mindestens 50 %, vorzugsweise mindestens 60 %, besonders bevorzugt mindestens 70 %, insbesondere mindestens 80 % und ganz besonders bevorzugt 90 % der in der Polyisocyanatzusammensetzung A vorliegenden Isocyanatgruppen, zu Isocyanuratstruktureinheiten katalysiert werden. Somit sind im fertigen Kunststoff entsprechende Anteile des in der Polyisocyanatzusammensetzung A ursprünglich enthaltenen Stickstoffs in Isocyanuratstrukturen gebunden. Nebenreaktionen, insbesondere solche zu Uretdion-, Allophanat-, und/oder Iminooxadiazindionstrukturen treten jedoch üblicherweise auf und können sogar gezielt genutzt werden, um z.B. die Glasübergangstemperatur (T_{g}) des erhaltenen Kunststoffs vorteilhaft zu beeinflussen. Der oben definierte Gehalt an Urethan-und/oder Allophanatgruppen liegt jedoch vorzugsweise auch in dieser Ausführungsform vor.

### Katalysator

Geeignete Katalysatoren für Herstellung des erfindungsgemäßen gefärbten Kunststoffs sind prinzipiell alle Verbindungen, die die Trimerisierung von Isocyanatgruppen zu Isocyanuratstrukturen beschleunigen.

Da die Isocyanuratbildung in Abhängigkeit vom verwendeten Katalysator häufig von Nebenreaktionen, beispielsweise der Dimerisierung zu Uretdionstrukturen oder der Trimerisierung unter Bildung von Iminoxadiazindionen (sogenannten asymmetrischen Trimerisaten) und bei Vorhandensein von Urethangruppen im Ausgangspolyisocyanat von Allophanatisierungsreaktionen, begleitet wird, soll im Rahmen der vorliegenden Erfindung der Begriff "Trimerisierung" synonym auch für diese zusätzlich ablaufenden Reaktionen stehen.

Gemäß einer besonderen Ausführungsform bedeutet Trimerisierung jedoch, dass vorwiegend Cyclotrimerisierungen von mindestens 50%, vorzugsweise mindestens 60%, besonders bevorzugt mindestens 70%, insbesondere mindestens 80%, der in der Zusammensetzung A) vorliegenden Isocyanatgruppen, zu Isocyanurat Struktureinheiten katalysiert werden. Nebenreaktionen, insbesondere solche zu Uretdion-, Allophanat-, und/oder Iminooxadiazindionstrukturen treten jedoch üblicherweise auf und können sogar gezielt genutzt werden, um z.B. den Tg-Wert des erhaltenen Polyisocyanuratkunststoffs vorteilhaft zu beeinflussen.

Geeignete Katalysatoren sind beispielsweise einfache tertiäre Amine, wie z.B. Triethylamin, Tributylamin, N,N-Dimethylanilin, N-Ethylpiperidin oder N,N'-Dimethylpiperazin. Geeignete Katalysatoren sind auch die in der GB-A 2 221 465 beschriebenen tertiären Hydroxyalkylamine, wie z.B. Triethanolamin, N-Methyl-diethanolamin, Dimethylethanolamin, N-Isopropyldiethanolamin und 1-(2-Hydroxyethyl)pyrrolidin, oder die aus der GB-A 2 222 161 bekannten, aus Gemischen tertiärer bicyclischer Amine, wie z.B. DBU, mit einfachen niedermolekularen aliphatischen Alkoholen bestehenden Katalysatorsysteme.

Als Trimerisierungskatalysatoren sind ebenfalls eine Vielzahl unterschiedlicher Metallverbindungen geeignet, so beispielsweise die in der DE-A 3 240 613 als Katalysatoren beschriebenen Oktoate und Naphthenate von Mangan, Eisen, Cobalt, Nickel, Kupfer, Zink, Zirkonium, Cer oder Blei oder deren Gemische mit Acetaten von Lithium, Natrium, Kalium, Calcium oder Barium, die aus DE-A 3 219 608 bekannten Natrium- und Kalium-Salze von linearen oder verzweigten Alkancarbonsäuren mit bis zu 10 C-Atomen, wie z.B. von Propionsäure, Buttersäure, Valeriansäure, Capronsäure, Heptansäure, Caprylsäure, Pelargonsäure, Caprinsäure und Undecylsäure, die aus der EP-A 0 100 129 bekannten Alkali- oder Erdalkalimetallsalze von aliphatischen, cycloaliphatischen oder aromatischen Mono- und Polycarbonsäuren mit 2 bis 20 C-Atomen, wie z.B. Natrium- oder Kaliumbenzoat, die aus der GB-A 1 391 066 und GB-A 1 386 399 bekannten Alkaliphenolate, wie z.B. Natrium- oder Kaliumphenolat, die aus der GB-A 0 809 809 bekannten Alkali- und Erdalkalioxide, -hydroxide, -carbonate, -alkoholate und -phenolate, Alkalimetallsalze von enolisierbaren Verbindungen sowie Metallsalze schwacher aliphatischer bzw. cycloaliphatischer Carbonsäuren, wie z.B. Natriummethoxid, Natriumacetat, Kaliumacetat, Natriumacetoessigester, Blei-2-ethylhexanoat und Bleinaphthenat, die aus der EP-A 0 056 158 und EP-A 0 056 159 bekannten, mit Kronenethern oder Polyetheralkoholen komplexierten basischen Alkalimetallverbindungen, wie z.B. komplexierte Natrium- oder Kaliumcarboxylate, das aus der EP-A 0 033 581 bekannte Pyrrolidinon-Kaliumsalz, die aus der Anmeldung EP-A 2 883 895 (EP 13 196 508.9) bekannten ein- oder mehrkernigen Komplexverbindung von Titan, Zirkonium und/oder Hafnium, wie z.B. Zirkoniumtetra-n-butylat, Zirkoniumtetra-2-ethylhexanoat und Zirkoniumtetra-2-ethylhexylat, sowie Zinnverbindungen der in European Polymer Journal, Vol. 16, 147 - 148 (1979) beschriebenen Art, wie z.B. Dibutylzinndichlorid, Diphenylzinndichlorid, Triphenylstannanol, Tributylzinnacetat, Tributylzinnoxid, Zinndioktoat, Dibutyl(dimethoxy)stannan und Tributylzinnimidazolat.

Weitere geeignete Trimerisierungskatalysatoren sind beispielsweise die aus der DE-A 1 667 309, EP-A 0 013 880 und EP-A 0 047 452 bekannten quaternären Ammoniumhydroxyde, wie z.B. Tetraethylammoniumhydroxid, Trimethylbenzylammoniumhydroxid, N,N-Dimethyl-N-dodecyl-N-(2-hydroxyäthyl)ammonium-hydroxid, N-(2-Hydroxyäthyl)-N,N-dimethyl-N-(2,2'-dihydroxymethylbutyl)ammoniumhydroxid und 1-(2-Hydroxyethyl)-1,4-diazabicyclo-[2.2.2]-octanhydroxid (Monoaddukt von Äthylenoxid und Wasser an 1,4-Diazabicyclo-[2.2.2]-octan), die aus EP-A 0 003 765 oder EP-A 0 010 589 bekannten quaternären Hydroxyalkylammoniumhydroxide, wie z.B. N,N,N-Trimethyl-N-(2-hydroxyäthyl)-ammonium-hydroxid, die aus DE-A 2 631 733, EP-A 0 671 426, EP-A 1 599 526 und US-B 4,789,705 bekannten Trialkylhydroxylalkylammoniumcarboxylate, wie z.B. N,N,N-Trimethyl-N-2-hydroxypropylammonium-p-tert.-butylbenzoat und N,N,N-Trimethyl-N-2-hydroxypropylammonium-2-ethylhexanoat, die aus der EP-A 1 229 016 bekannten quartären Benzylammoniumcarboxylate, wie z.B. N-Benzyl-N,N-dimethyl-N-ethylammoniumpivalat, N-Benzyl-N,N-dimethyl-N-ethylammonium-2-ethylhexanoat, N-Benzyl-N,N,N-tributylammonium-2-ethylhexanoat, N,N-Dimethyl-N-ethyl-N-(4-methoxy-benzyl)ammonium-2-ethylhexanoat oder N,N,N-Tributyl-N-(4-methoxybenzyl)ammonium-pivalat, die aus der WO 2005/087828 bekannten tetrasubstituierten Ammonium-α-Hydroxycarboxylate, wie z.B. Tetramethylammonium-lactat, die aus der EP-A 0 339 396, EP-A 0 379 914 und EP-A 0 443 167 bekannten quartären Ammonium- oder Phosphoniumfluoride, wie z.B. N-Methyl-N,N,N-trialkylammoniumfluoride mit C₈-C₁₀-Alkylresten, N,N,N,N-Tetra-n-butylammoniumfluorid, N,N,N-Trimethyl-N-benzylammonium-fluorid, Tetramethylphosphoniumfluorid, Tetraethylphosphoniumfluorid oder Tetra-n-butylphosphoniumfluorid, die aus der EP-A 0 798 299, EP-A 0 896 009 und EP-A 0 962 455 bekannten quaternären Ammonium- und Phosphoniumpolyfluoride, wie z.B. Benzyl-trimethylammoniumhydrogenpolyfluorid, die aus der EP-A 0 668 271 bekannten Tetraalkylammoniumalkylcarbonate, die durch Umsetzung tertiärer Amine mit Dialkylcarbonaten erhältlich sind, oder betainstrukturierte Quartär-Ammonioalkylcarbonate, die aus der WO 1999/023128 bekannten quaternären Ammoniumhydrogencarbonate, wie z.B. Cholin-bicarbonat, die aus der EP-A 0 102 482 bekannten, aus tertiären Aminen und alkylierend wirkenden Estern von Säuren des Phosphors erhältlichen quartären Ammoniumsalze, wie z.B. Umsetzungsprodukte von Triethylamin, DABCO oder N-Methylmorpholin mit Methanphosphonsäuredimethylester, oder die aus WO 2013/167404 bekannten tetrasubstituierten Ammoniumsalze von Lactamen, wie z.B. Trioctylammoniumcaprolactamat oder Dodecyltrimethylammoniumcaprolactamat.

Weitere geeignete Trimerisierungskatalysatoren finden sich beispielsweise in J. H. Saunders und K. C. Frisch, Polyurethanes Chemistry and Technology, S. 94 ff (1962) und der dort zitierten Literatur.

Die Katalysatoren können sowohl einzeln als auch in Form beliebiger Gemische untereinander eingesetzt werden.

Bevorzugte Katalysatoren sind Metallverbindungen der vorstehend genannten Art, insbesondere Carboxylate und Alkoholate von Alkalimetallen, Erdalkalimetallen oder Zirkonium sowie organische Zinnverbindungen der genannten Art.

Besonders bevorzugte Trimerisierungskatalysatoren sind Natrium- und Kaliumsalze aliphatischer Carbonsäuren mit 2 bis 20 C-Atomen sowie aliphatisch substituierte Zinnverbindungen.

Ganz besonders bevorzugte Trimerisierungskatalysatoren sind Kaliumacetat, Zinndioktoat und/- oder Tributylzinnoxid.

Gemäß einer Ausführungsform der Erfindung findet die katalytische Trimerisierung in Gegenwart eines Trimerisierungskatalysators statt, wobei der Trimerisierungskatalysator vorzugsweise mindestens ein Alkalimetall- oder Erdalkalimetallsalz umfasst.

Gemäß einer bevorzugten Ausführungsform der Erfindung umfasst der Trimerisierungskatalysator als Alkalimetallsalz Kaliumacetat und/oder einen Polyether, insbesondere ein Polyethylenglykol.

Der Trimerisierungskatalysator kommt im Allgemeinen in einer auf die Menge der eingesetzten Polyisocyanatzusammensetzung A bezogenen Konzentration von 0,0005 bis 15,0 Gew.-%, bevorzugt von 0,05 bis 13,0 Gew.-%, oder bevorzugt von 0,1 bis 10,0 Gew.-%, besonders bevorzugt von 0,2 bis 5,0 Gew.-%, ganz besonders bevorzugt von 0,5 bis 3,0 Gew.-% zum Einsatz.

Katalysatoren können, falls erforderlich, zur Verbesserung ihrer Mischbarkeit mit der Polyisocyanatzusammensetzung A in geeigneten, bevorzugt nicht Isocyanat-reaktiven, Lösungsmitteln gelöst werden. Diese sind dem Fachmann bekannt.

### Füllstoffe

Der gefärbte Kunststoff auf Basis vernetzter Polyisocyanate enthält wenigstens 5 Gew.-% eines faserförmigen Füllstoffs bezogen auf die Summe des Gesamtgewichtes von Polyisocyanatzusammensetzung A, Farbstoff und faserförmigem Füllstoff.

Geeignete faserförmige Füllstoffe sind beispielsweise alle dem Fachmann bekannten anorganischen Fasern, organischen Fasern, Naturfasern oder deren Mischungen.

Als faserförmige Füllstoffe werden Materialien verstanden, deren Aspektverhältnis, d.h. die Länge geteilt durch den Durchmesser, größer 5, bevorzugt größer 20, insbesondere größer 50 und besonders bevorzugt größer 100 ist.

Beispiele für erfindungsgemäß geeignete anorganische Fasern sind Glasfasern, Carbonfasern, Basaltfasern, Borfasern, Keramikfasern, Whisker, Kieselsäurefasern sowie metallische Verstärkungsfasern. Beispiele für erfindungsgemäß geeignete organische Fasern sind Aramidfasern, Kohlenstofffasern, Polyesterfasern, Nylon-Fasern sowie Plexiglas-Fasern. Beispiele für erfindungsgemäß geeignete Naturfasern sind Flachs- oder Hanffasern, Holzfasern, Cellulosefasern sowie Sisalfasern.

### Verfahren

In einer weiteren Ausführungsform betrifft die vorliegende Erfindung ein Verfahren zur Herstellung eines gefärbten Kunststoffs auf Basis von vernetzten Polyisocyanaten enthaltend die Verfahrensschritte
a) Vermischen der Polyisocyanatzusammensetzung A mit wenigstens einem Pigment, wenigstens einem faserförmigen Füllstoff mit einem Aspektverhältnis von wenigstens 100 und wenigstens einem Vernetzungskatalysator; und
b) Katalytische Vernetzung der Polyisocyanatzusammensetzung A zu dem gefärbten Kunststoff, wobei sich am Ende der katalytischen Vernetzung die in Uretdion-, Isocyanurat-, Biuret- und Iminooxadiazindionstrukturen gebundenen Stickstoffanteile auf mindestens 60 % des Gesamtstickstoffgehaltes der Polyisocyanatzusammensetzung A summieren.

Der entstehende Kunststoff ist vorzugsweise ein Isocyanuratkunststoff. Ein "Polyisocyanuratkunststoff" ist ein Kunststoff wie oben in dieser Anmeldung beschrieben, der durch das Vorhandensein von Isocyanuratgruppen gekennzeichnet ist.

Als Katalysatoren für das erfindungsgemäße Verfahren sind grundsätzlich alle in dieser Anmeldung beschriebenen Katalysatoren geeignet.

Die katalytische Vernetzung findet vorzugsweise in einem Temperaturbereich zwischen 30 und 250° C statt. Sie ist vorzugsweise innerhalb von höchstens 6 Stunden weitgehend abgeschlossen. "Weitgehend abgeschlossen" bedeutet, dass wenigstens 80 % der in der Polyisocyanatzusammensetzung A zu Beginn des Verfahrensschrittes a) vorhandenen reaktionsfähigen Isocyanatgruppen verbraucht wurden.

Die folgenden Ausführungsbeispiele dienen dazu, die Erfindung zu illustrieren. Sie sollen den Schutzbereich der Patentansprüche in keiner Weise beschränken.

### Beispiele

### Allgemeine Angaben:

In den Beispielen sind alle Prozentangaben, soweit nicht anders vermerkt, als Gewichtsprozent zu verstehen.

Die zur Zeit der Versuchsdurchführung herrschende Umgebungstemperatur von 23° C wird als RT (Raumtemperatur) bezeichnet.

### Messmethoden:

Die nachstehend aufgeführten Methoden zur Bestimmung der entsprechenden Parameter wurden zur Durchführung bzw. Auswertung der Beispiele angewendet und sind auch die Methoden zur Bestimmung der erfindungsgemäß relevanten Parameter im Allgemeinen.

### Bestimmung der Phasenübergänge mittels DSC:

Die Phasenübergänge wurde mittels DSC (Differential Scanning Calorimetry) mit einem Mettler DSC 12E (Mettler Toledo GmbH, Gießen, DE) entsprechend DIN EN 61006 bestimmt. Eine Kalibrierung erfolgte durch die Temperatur des Schmelz-Onsets von Indium und Blei. Es wurden 10 mg Substanz in Normalkapseln eingewogen. Die Messung erfolgte durch drei Aufheizungen von -50° C bis +200° C bei einer Heizrate von 20 K/min mit anschließender Abkühlung mit einer Kühlrate von 320 K/min. Die Kühlung erfolgte durch flüssigen Stickstoff. Als Spülgas wurde Stickstoff verwendet. Die angegebenen Werte basieren jeweils auf der Auswertung der 1. Aufheizkurve, da bei den untersuchten Reaktivsystemen durch die Temperaturbelastung in der DSC Veränderungen der Probe im Messprozess bei hohen Temperaturen möglich sind. Die Schmelztemperaturen Tₘ wurden aus den Temperaturen an den Maxima der Wärmeflusskurven erhalten. Die Glasübergangstemperatur T_{g} wurde aus der Temperatur bei der halben Höhe einer Glasübergangsstufe erhalten.

### Bestimmung von Infrarotspektren:

Die Infrarotspektren wurden an einem mit einer ATR-Einheit ausgerüstetem FT-IR-Spektrometer der Firma Bruker gemessen.

### Ausgangsverbindungen:

Polyisocyanat A1: Desmodur® N 3600 ist ein HDI-Trimerisat (NCO-Funktionalität >3) mit einem NCO-Gehalt von 23,0 Gew.-% der Fa. Covestro Deutschland AG. Die Viskosität beträgt ca. 1200 mPas bei 23°C (DIN EN ISO 3219/A.3). Vor der Verwendung wurde das Material im Vakuum entgast.

Polyethylenglycol (PEG) 400 wurde mit einer Reinheit von > 99 Gew.-% von der Fa. ACROS bezogen und vor der Verwendung getrocknet und im Vakuum entgast.

Kaliumacetat wurde mit einer Reinheit von > 99 Gew.-% von der Fa. ACROS bezogen.

Als Farbstoffe wurden folgende Substanzen verwendet:
- Ruß (Printex® G der Firma Orion Engineered Carbons)
- Organische Farbstoffe (Makrolex® Green 5B der Firma Lanxess), ein Anthrachinonfarbstoff
- Zinksulfid in Trägermedium (UPL-10478 der Firma Chromaflo)

### Herstellung der Katalysatorlösung Kl:

Kaliumacetat (5,0 g) wurde in PEG 400 (95,0 g) bei RT solange gerührt, bis alles gelöst war. Es wurde so eine 5 Gew.-% Lösung von Kaliumacetat in PEG 400 (Kl) erhalten und ohne weitere Behandlung als Trimerisierungskatalysator eingesetzt.

### Herstellung der Farbpaste:

Es wurden je 25 g der Farbstoffe in 75 g Polyisocyanat A1 gegeben und in einem Speedmixer DAC 150.1 FVZ der Fa. Hauschild bei 2750 min-1 während 5 min dispergiert. UPL-10478 wurde ohne Dispergierung in Polyisocyanat A1 wie erhalten verwendet.

### Herstellung der gefärbten Polyisocyanurate:

Die Reaktionsmischung wurde durch Vermischen von 38,4 g Polyisocyanat A1 mit 1,6 g der Katalysatorlösung bei 23 °C während 3 min in einem Speedmixer DAC 150.1 FVZ der Fa. Hauschild bei 2750 min-1 hergestellt. Diese wurde dann mit einer entsprechenden Menge Farbpaste versetzt, zur Vernetzung in eine geeignete Form gegossen und anschließend während 5 min bei 180 °C im Ofen vernetzt.

### Ausführungsbeispiel 1:

Wie oben beschrieben wurden 40 g der Reaktionsmischung mit 2 g einer Farbpaste auf Basis von Printex® G und Polyisocyanat A1 versetzt und im Ofen ausgehärtet. Man erhielt einen homogen schwarz gefärbten Kunststoff mit einer Glasübergangstemperatur von ca. 100 °C. Der Umsatz war > 90% (bestimmt durch IR-Spektroskopie, Abnahme der NCO-Bande bei 2270 cm-1).

### Ausführungsbeispiel 2:

Wie oben beschrieben wurden 40 g der Reaktionsmischung mit 2 g einer Farbpaste auf Basis von Makrolex® Green 5B und Polyisocyanat A1 versetzt und im Ofen ausgehärtet. Man erhielt einen homogen grün gefärbten Kunststoff mit einer Glasübergangstemperatur von ca. 100 °C. Der Umsatz war > 90% (bestimmt durch IR-Spektroskopie, Abnahme der NCO-Bande bei 2270 cm-1).

### Ausführungsbeispiel 3:

Wie oben beschrieben wurden 40 g der Reaktionsmischung mit 2 g der Farbpaste UPL-10478 versetzt und im Ofen ausgehärtet. Man erhielt einen homogen weiß gefärbten Kunststoff mit einer Glasübergangstemperatur T_{g} von ca. 95° C. Der Umsatz war > 90% (bestimmt durch IR-Spektroskopie, Abnahme der NCO-Bande bei 2270 cm-1).

## Patentansprüche

1. Gefärbter Kunststoff erhältlich durch die katalytische Vernetzung einer Polyisocyanatzusammensetzung A in Gegenwart wenigstens eines Pigments, **dadurch gekennzeichnet, dass** (i) der Kunststoff wenigstens 5 Gew.-% eines faserförmigen Füllstoffs mit einem Aspektverhältnis von wenigstens 100 bezogen auf die Summe der Gewichte von Polyisocyanatzusammensetzung A, Pigment und faserförmigem Füllstoff enthält; und (ii) sich die in Uretdion-, Isocyanurat-, Biuret- und Iminooxadiazindionstrukturen gebundenen Stickstoffanteile auf mindestens 60 % des Gesamtstickstoffgehaltes der Polyisocyanatzusammensetzung A summieren.

2. Gefärbter Kunststoff nach Anspruch 1, **dadurch gekennzeichnet, dass** wenigstens 8 Gew.-% des in der Polyisocyanatzusammensetzung A enthaltenen Kohlenstoffs in Isocyanuratgruppen gebunden vorliegen.

3. Gefärbter Kunststoff nach Anspruch 1 oder 2, **dadurch gekennzeichnet, dass** das Verhältnis der Summe aller Kohlenstoffatome gebunden in Isocyanurat- und Iminooxadiazindiongruppen und der Summe aller Kohlenstoffatome gebunden in Urethanen, Allophanaten, Thiolen, Thiourethanen, Thioallophanaten, Harnstoffen und Biuretten in der ausgehärteten Polymermatrix des erfindungsgemäßen Verbundwerkstoffs zwischen 500 und 1 liegt.

4. Gefärbter Kunststoff gemäß einem der Ansprüche 1 bis 3, **dadurch gekennzeichnet, dass** das Pigment Ruß oder Zinksulfid ist.

5. Gefärbter Kunststoff gemäß einem der Ansprüche 1 bis 4 mit einem Glaspunkt bestimmt nach DIN EN 61006, der ≤ dem Glaspunkt des nicht gefärbten Kunststoffes auf Basis von vernetzten Polyisocyanaten ist.

6. Gefärbter Kunststoff gemäß einem der Ansprüche 1 bis 5 mit einer Dichte, die ≥ der Dichte des nicht gefärbten Kunststoffes auf Basis von vernetzten Polyisocyanaten ist.

7. Gefärbter Kunststoff gemäß einem der Ansprüche 1 bis 6, wobei der Kunststoff das Pigment in einer Menge in einem Bereich von 0,05 bis 20 Gew.-%, bezogen auf das Gesamtgewicht des gefärbten Kunststoffs beinhaltet.

8. Formkörper hergestellt aus dem gefärbten Kunststoff gemäß einem der Ansprüche 1 bis 7.

9. Verfahren zur Herstellung eines gefärbten Kunststoffs auf Basis von vernetzten Polyisocyanaten enthaltend die Verfahrensschritte
a) Vermischen der Polyisocyanatzusammensetzung A mit wenigstens einem Pigment, wenigstens einem faserförmigen Füllstoff mit einem Aspektverhältnis von wenigstens 100 und wenigstens einem Vernetzungskatalysator; und
b) Katalytische Vernetzung der Polyisocyanatzusammensetzung A zu dem gefärbten Kunststoff, wobei sich am Ende der katalytischen Vernetzung die in Uretdion-, Isocyanurat-, Biuret- und Iminooxadiazindionstrukturen gebundenen Stickstoffanteile auf mindestens 60 % des Gesamtstickstoffgehaltes der Polyisocyanatzusammensetzung A summieren.

## Claims

1. Coloured plastic obtainable by the catalytic crosslinking of a polyisocyanate composition A in the presence of at least one pigment, **characterized in that** (i) the plastic comprises at least 5% by weight of a fibrous filler with aspect ratio at least 100, based on the total of the weights of polyisocyanate composition A, pigment and fibrous filler; and (ii) the total nitrogen content bound within uretdione structures, isocyanurate structures, biuret structures and iminooxadiazinedione structures is at least 60% of the total nitrogen content of the polyisocyanate composition A.

2. Coloured plastic according to Claim 1, **characterized in that** at least 8% by weight of the carbon present in the polyisocyanate composition A is present in bound form within isocyanurate groups.

3. Coloured plastic according to Claim 1 or 2, **characterized in that** the ratio calculated from the total number of carbon atoms bound within isocyanurate groups and iminooxadiazinedione groups and the total number of carbon atoms bound within urethanes, allophanates, thiols, thiourethanes, thioallophanates, ureas and biurets in the hardened polymer matrix of the composite material according to the invention is between 500 and 1.

4. Coloured plastic according to any of Claims 1 to 3, **characterized in that** the pigment is carbon black or zinc sulfide.

5. Coloured plastic according to any of Claims 1 to 4 with glass transition temperature determined according to DIN EN 61006 that is lower than or equal to the glass transition temperature of the uncoloured plastic based on crosslinked polyisocyanates.

6. Coloured plastic according to any of Claims 1 to 5 with density that is greater than or equal to the density of the uncoloured plastic based on crosslinked polyisocyanates.

7. Coloured plastic according to any of Claims 1 to 6, where the plastic comprises a quantity of the pigment in the range from 0.05 to 20% by weight, based on the total weight of the coloured plastic.

8. Moulding produced from the coloured plastic according to any of Claims 1 to 7.

9. Process for the production of a coloured plastic based on crosslinked polyisocyanates comprising the steps of:
a) mixing of the polyisocyanate composition A with at least one pigment, at least one fibrous filler with aspect ratio at least 100 and at least one crosslinking catalyst; and
b) catalytic crosslinking of the polyisocyanate composition A to give the coloured plastic, where at the end of the catalytic crosslinking the total nitrogen content bound within uretdione structures, isocyanurate structures, biuret structures and iminooxadiazinedione structures is at least 60% of the total nitrogen content of the polyisocyanate composition A.

## Revendications

1. Matière plastique colorée pouvant être obtenue par la réticulation catalytique d'une composition de polyisocyanate A en présence d'au moins un pigment, **caractérisée en ce que** (i) la matière plastique contient au moins 5 % en poids d'une charge fibreuse ayant un rapport de longueur d'au moins 100, par rapport à la somme des poids de la composition de polyisocyanate A, du pigment et de la charge fibreuse ; et (ii) la somme des fractions d'azote reliées dans des structures uretdione, isocyanurate, biuret et iminooxadiazine-dione est d'au moins 60 % de la teneur totale en azote de la composition de polyisocyanate A.

2. Matière plastique colorée selon la revendication 1, **caractérisée en ce qu'**au moins 8 % en poids du carbone contenu dans la composition de polyisocyanate A se présente sous forme reliée dans des groupes isocyanurate.

3. Matière plastique selon la revendication 1 ou 2, **caractérisée en ce que** le rapport entre la somme de tous les atomes de carbone reliés dans des groupes isocyanurate et iminooxadiazine-dione et la somme de tous les atomes de carbone reliés dans des uréthanes, des allophanates, des thiols, des thiouréthanes, des thioallophanates, des urées et des biurets dans la matrice de polymère durcie du matériau composite selon l'invention est compris entre 500 et 1.

4. Matière plastique colorée selon l'une quelconque des revendications 1 à 3, **caractérisée en ce que** le pigment est le noir de carbone ou le sulfure de zinc.

5. Matière plastique colorée selon l'une quelconque des revendications 1 à 4, ayant une température de transition vitreuse déterminée selon DIN EN 61006 qui est ≤ à la température de transition vitreuse de la matière plastique non colorée à base de polyisocyanates réticulés.

6. Matière plastique colorée selon l'une quelconque des revendications 1 à 5, ayant une densité qui est ≥ à la densité de la matière plastique non colorée à base de polyisocyanates réticulés.

7. Matière plastique colorée selon l'une quelconque des revendications 1 à 6, dans laquelle la matière plastique contient le pigment en une quantité dans une plage allant de 0,05 à 20 % en poids, par rapport au poids total de la matière plastique colorée.

8. Corps moulé fabriqué à partir de la matière plastique colorée selon l'une quelconque des revendications 1 à 7.

9. Procédé de fabrication d'une matière plastique colorée à base de polyisocyanates réticulés, contenant les étapes de procédé suivantes :
a) le mélange de la composition de polyisocyanate A avec au moins un pigment, au moins une charge fibreuse ayant un rapport de longueur d'au moins 100 et au moins un catalyseur de réticulation, et
b) la réticulation catalytique de la composition de polyisocyanate A en la matière plastique colorée, la somme des fractions d'azote reliées dans des structures uretdione, isocyanurate, biuret et iminooxadiazine-dione étant d'au moins 60 % de la teneur totale en azote de la composition de polyisocyanate A à la fin de la réticulation catalytique.
